# EUROPEAN PATENT APPLICATION

(11) **EP 4 708 451 A1**
(43) Date of publication of application: **11.03.2026**
(21) Application number: 25198816.8
(22) Date of filing: 28.08.2025
(51) Int. Cl.: H01M 10/48, H01M 50/103, H01M 50/569

(54) **SECONDARY BATTERY TEMPERATURE EVALUATION APPARATUS AND METHOD AND SECONDARY BATTERY FOR TEMPERATURE EVALUATION**

(30) Priority: 04.09.2024 KR 20240120419
(71) Applicant: SAMSUNG SDI CO., LTD., Yongin-si, Gyeonggi-do 17084 (KR)
(72) Inventor: CHOI, Wondo, 17084 Yongin-si (KR)
(74) Representative: Marks & Clerk LLP

(57) **Abstract**

A secondary battery temperature evaluation apparatus, including a case having an opening in at least one end of the case, an electrode assembly being accommodated in the case, a temperature detector attached to the electrode assembly accommodated in the case, the temperature detector detecting a temperature and outputting a temperature detection signal, and a wire connected to the temperature detector, the wire being exposed after passing from inside to outside of the case and through which the temperature detection signal is transmitted outside of the case.

## Description

### BACKGROUND

### 1. Field

Embodiments include a secondary battery temperature evaluation apparatus and a method and secondary battery for temperature evaluation.

### 2. Description of the Related Art

Different from primary batteries that are not designed to be charged, secondary batteries are designed to be discharged and recharged. Generally, a secondary battery includes an electrode assembly including a positive electrode plate, a negative electrode plate, and a separator. An electrode tab electrically connected to an external terminal is formed on each of the positive electrode plate and the negative electrode plate.

The above information disclosed in this Background section is for enhancement of understanding of the background of the present disclosure, and therefore, it may contain information that does not constitute a related (or prior) art.

### SUMMARY

Embodiments include a secondary battery temperature evaluation apparatus, including a case having an opening in at least one end of the case, an electrode assembly being accommodated in the case, a temperature detector attached to the electrode assembly accommodated in the case, the temperature detector being configured to detect a temperature and to output a temperature detection signal, and a wire connected to the temperature detector, the wire being exposed, i.e. resulting in an exposed wire, after passing from inside to outside of the case and through which the temperature detection signal is configured to be transmitted outside of the case.

The secondary battery temperature evaluation apparatus may further include a connector coupled to the wire (e.g. to an exposed part of the wire) through which the temperature detection signal is provided to a measurement device.

The temperature detector may be attached to an electrode tab of the electrode assembly.

The case may include a through hole through which the wire passes.

The secondary battery temperature evaluation apparatus may further include a sealing portion blocking the through hole along with the wire.

The case may be a prismatic secondary battery case having two facing wide surfaces opposite to each other and two narrow surfaces opposite to each other, and the through hole may be in a narrow surface of the case, i.e. in one of the two narrow surfaces.

The temperature detector may include a plurality of temperature detectors, and the wire may include a plurality of wires, each of the plurality of wires connected to one of the plurality of temperature detectors being exposed after passing from the inside to the outside of the case.

The temperature detector may include a plurality of temperature detectors, and wires connected to the plurality of temperature detectors may be combined together and exposed after passing from the inside to the outside of the case.

Embodiments include a secondary battery temperature evaluation method, including providing a case having an opening in at least one end of the case, providing a sensor including a temperature detector and a wire through which a temperature detection signal detected by the temperature detector is transmitted to an outside of the case, attaching the temperature detector of the sensor to an electrode assembly, exposing the wire of the sensor such that the wire passes from an inside to the outside of the case, accommodating the electrode assembly in the case, and connecting the wire exposed to the outside of the case to a temperature measuring device to measure a temperature.

Attaching the temperature detector of the sensor to the electrode assembly may include attaching the temperature detector of the sensor to an electrode tab of the electrode assembly.

Attaching the temperature detector of the sensor to the electrode assembly may include attaching a plurality of temperature detectors to the electrode assembly at different locations, and exposing the wire of the sensor such that the wire of the sensor passes from the inside of the case to the outside of the case may include exposing each wire of the plurality of temperature detectors such that each wire passes from the inside to the outside of the case. For example, there may be a plurality of the wires.

Attaching the temperature detector of the sensor to the electrode assembly may include attaching each temperature detector of a plurality of sensors to the electrode assembly at different locations, and exposing the wire of the sensor such that the wire passes from the inside to the outside of the case may include combining each wire (e.g. of a plurality of wires) connected to the plurality of temperature detectors, resulting in wires, and exposing the wires such that the wires pass from the inside to the outside of the case.

Embodiments include a secondary battery for temperature evaluation, including a case having an opening in at least one end of the case, an electrode assembly accommodated in the case, the electrode assembly including a plurality of electrode plates having electrode tabs thereon, a cap assembly including terminals electrically connected to the electrode tabs, and a sensor including a temperature detector attached to the electrode assembly and a wire, wherein the temperature detector is configured to detect a temperature, and to output a temperature detection signal, and wherein the wire is connected to the temperature detector, the wire being exposed after passing from an inside to an outside of the case, the wire being configured to transmit the temperature detection signal to the outside of the case.

The secondary battery for temperature evaluation may further include a connector coupled to the wire exposed to the outside of the case, the wire being configured to transmit the temperature detection signal to a measurement device.

The temperature detector of the sensor may be attached to the electrode tabs of the electrode assembly.

The case may include a through hole through which the wire of the sensor passes.

The case may be a prismatic secondary battery case having two wide surfaces opposite to each other and two narrow surfaces opposite to each other, and the through hole may be in a narrow surface of the case (i.e. in one of the two narrow surfaces).

The secondary battery for temperature evaluation may further include a sealing portion blocking the through hole along with the wire.

The sensor may include a plurality of sensors, and each wire of the plurality of sensors is exposed after passing from the inside to the outside of the case.

The sensor may include a plurality of sensors, and each wire of the plurality of sensors may be combined and exposed after passing from the inside to the outside of the case.

At least some of the above and other features of the invention are set out in the claims.

Aspects and features of the present disclosure are not limited to those described above, and other aspects and features not specifically mentioned herein will be clearly understood by those of ordinary skill in the art from the description of the present disclosure below.

### BRIEF DESCRIPTION OF THE DRAWINGS

Features will become apparent to those of ordinary skill in the art by describing in detail various embodiments with reference to the attached drawings, in which:
FIG. 1 is a top perspective view illustrating an exterior of a prismatic secondary battery according to one or more embodiments of the present disclosure;
FIG. 2 illustrates an inner structure of the secondary battery of FIG. 1;
FIG. 3 is a view illustrating sensor attachment points inside and outside a cell according to one or more embodiments of the present disclosure;
FIG. 4 is a view illustrating an exterior of a secondary battery to be used in a secondary battery temperature evaluation apparatus according to one or more embodiments of the present disclosure;
FIGS. 5A and 5B are views for describing a secondary battery temperature evaluation apparatus according to one or more embodiments of the present disclosure;
FIGS. 6A, 6B and 6C are views for describing a secondary battery temperature evaluation apparatus according to one or more embodiments of the present disclosure;
FIG. 7 is a view illustrating an exterior of a secondary battery for temperature evaluation according to one or more embodiments of the present disclosure; and
FIGS. 8A and 8B are views for describing a method of manufacturing the secondary battery for temperature evaluation shown in FIG. 7, according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

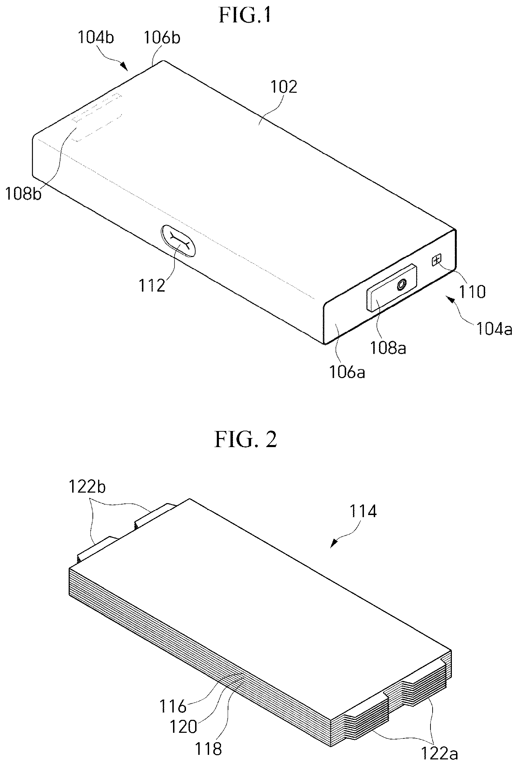

FIG. 1 is a perspective view illustrating a secondary battery to which a temperature evaluation apparatus may be applied according to one or more embodiments of the present disclosure.

Referring to FIG. 1, a case 102 defines an overall appearance of the prismatic secondary battery, and may be made of a conductive metal, such as aluminum, aluminum alloy, or nickel-plated steel. In addition, the case 102 may provide a space for accommodating an electrode assembly therein.

A cap assembly 104a, 104b may include a cap plate 106a, 106b that covers the opening of the case 102.

A first terminal 108a may be installed on one side cap assembly 104a. The first terminal 108a may be electrically connected to the positive or negative electrode inside the case and may be installed on the outside of the cap plate 106a. In addition, a second terminal 108b may be installed in the other (opposite) side of the cap assembly 104b. The second terminal 108b may be electrically connected to the negative or positive electrode inside the case and may be installed on the outside of the cap plate 106b.

The cap plate 106a and/or 106b may be equipped with an electrolyte injection port 110 formed to install a sealing plug (or seal pin) therein, and a vent 112. The vent 112 is for discharging gas generated inside the secondary battery.

FIG. 2 is a schematic diagram of an electrode assembly 114, as inserted into the case 102 of FIG. 1. The electrode assembly 114 may be formed by winding or stacking a first electrode plate 116, a separator 120, and a second electrode plate 118.

FIG. 2 shows a stacked electrode assembly 114. A first electrode tab 122a electrically connected to the first terminal 108a of the first cap assembly 104a shown in FIG. 1 may be formed on the first electrode plate 116. A second electrode tab 122b may be electrically connected to the second terminal 108b of the second cap assembly 104b shown in FIG. 1 and may be formed on the second electrode plate 118.

In one or more other embodiments, the electrode assembly 114 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case may vary. The first electrode plate of the electrode assembly may act as a negative electrode, and the second electrode plate may act as a positive electrode. Of course, the reverse is also possible.

The first electrode plate 116 may be formed by applying a first electrode active material, such as graphite, carbon, or the like, to a first electrode current collector formed of a metal foil, such as copper, a copper alloy, nickel, a nickel alloy, or the like. The first electrode plate 116 may include the first electrode tab 122a (e.g., a first uncoated portion) that is a region to which the first electrode active material is not applied. The first electrode tab 122a may act as a current flow path between the first electrode plate 116 and the first terminal 108a. In some embodiments, when the first electrode plate 116 is manufactured, the first electrode tab 122a may formed by being cut in advance to protrude to one side of the electrode assembly 114, or the first electrode tab 122a may protrude to one side of the electrode assembly 114 more than (e.g., farther than or beyond) the separator without being separately cut.

The second electrode plate 118 may be formed by applying a second electrode active material, such as a transition metal oxide, on a second electrode current collector formed of a metal foil, such as aluminum or an aluminum alloy. The second electrode plate 118 may include the second electrode tab 122b (e.g., a second uncoated portion) that is a region to which the second electrode active material is not applied. The second electrode tab 122b may act as a current flow path between the second electrode plate 118 and the second terminal 108b. In one or more embodiments, the second electrode tab 122b may be formed by being cut in advance to protrude to the other side (e.g., the opposite side) of the electrode assembly when the second electrode plate 118 is manufactured, or the second electrode plate 118 may protrude to the other side of the electrode assembly 114 more than (e.g., farther than or beyond) the separator 120 without being separately cut.

The separator 120 prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

A first current collector and a second current collector may be electrically connected to the first electrode tab 122a and the second electrode tab 122b, i.e. to the first terminal 108a and the second terminal 108b.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but other materials are possible.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0<x<2), a Si-based alloy, or a combination thereof.

The silicon-carbon composite may be a composite of silicon and amorphous carbon. According to one or more embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but other materials are possible.

The organic material and the inorganic material may be mixed in one coating layer or may be in the form of a coating layer including (or containing) an organic material and a coating layer including (or containing) an inorganic material that are stacked on each other.

Currently, a sensor is attached to an outer side of the cell to perform evaluation when a temperature of a secondary battery cell is evaluated.

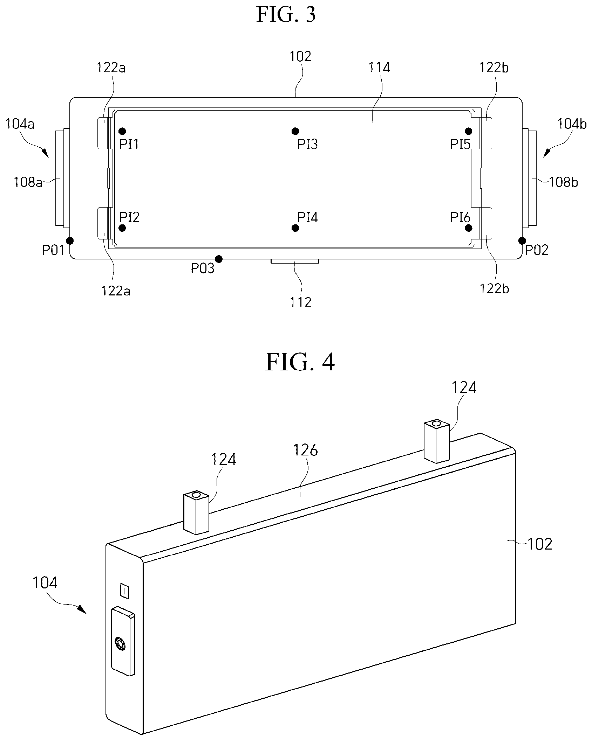

FIG. 3 shows attachment points PO1, PO2, and PO3 at which sensors such as thermocouples (TCs) and thermistors are attached near positive and negative terminals 108A and 108B and a vent 112 on an outer side of the case 102. In this case, there are disadvantages that it is difficult to precisely measure the heat generation of the corresponding cell due to the temperature resistance of a case, and measurement positions may be changed depending on the worker, and a result value can be calculated differently depending on the measurement location.

In order to solve the above problems, sensors are attached to an electrode assembly 114 in a cell using a temperature evaluation apparatus according to the present disclosure to perform temperature evaluation as shown in FIG. 3. Attachment points PI1, PI2, PI3, PI4, PI5, and PI6 at which the sensors are attached to the electrode assembly 114 are illustrated in FIG. 3.

FIG. 4 is a view illustrating an exterior of a secondary battery to be used in the secondary battery temperature evaluation apparatus according to one or more embodiments of the present disclosure.

Referring to FIG. 4, sensors (temperature detectors) for temperature detection are disposed in a case 102, and connectors 124 are coupled to an outer side of the case.

Wires connected to the temperature detectors attached to the electrode assembly in the case 102 may be exposed after passing from the inside to the outside of the case 102 (which will be described below), and the exposed portions of the wires may be coupled to the connectors 124. Temperature measuring devices may be connected to the connectors 124 to perform temperature evaluation of the secondary battery.

In FIG. 4, it is illustrated that the number of the connectors 124 is two. However, a different number of connectors is possible. In addition, in FIG. 4, the case 102 is a case for a prismatic secondary battery having two wide surfaces opposite to each other and two narrow surfaces opposite to each other, and the connectors 124 are located on a narrow surface 126 of the prismatic case. However, the idea of the present disclosure may also be applied to various prismatic batteries, cylindrical batteries, pouch batteries, and coin batteries whose shapes are different from that of FIG. 4.

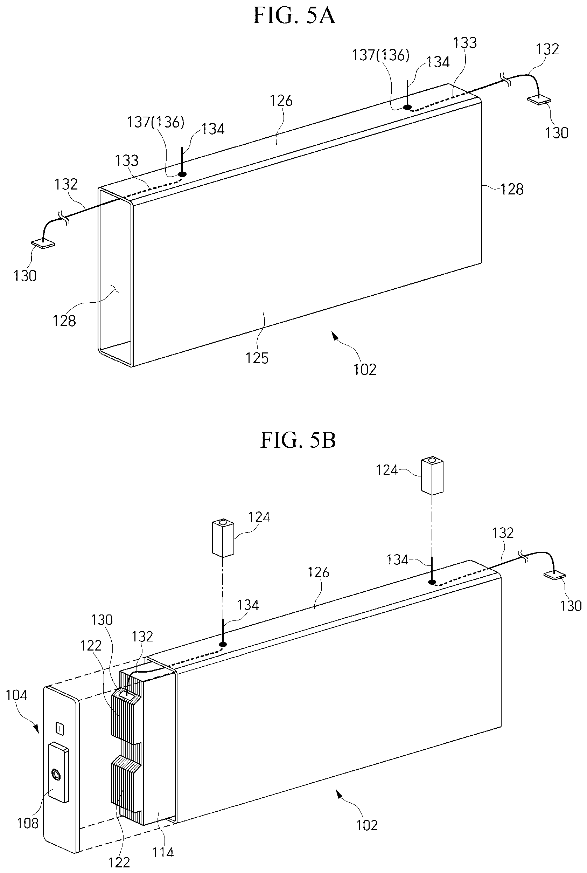

FIGS. 5A and 5B are views for describing a secondary battery temperature evaluation apparatus according to one or more embodiments of the present disclosure. FIGS. 5A and 5B are also views for describing a method of manufacturing the secondary battery for temperature evaluation shown in FIG. 4. FIG. 5A shows a case 102 in which an electrode assembly 114 is not yet accommodated, and FIG. 5B shows the electrode assembly 114 being accommodated in the case 102.

The secondary battery temperature evaluation apparatus according to one or more embodiments of the present disclosure may include the case 102 in which openings 128 are formed in one or more one ends (both ends in FIG. 5A) of the case 102 and the electrode assembly 114 is accommodated, temperature detectors 130, which are attached to the electrode assembly 114 accommodated in the case 102, and which detect temperatures, and output temperature detection signals, and wires 132 which are connected to the temperature detectors 130. The wires 132 may be exposed after passing from the inside to the outside of the case 102 and the temperature detection signals are transmitted to the outside of the case 102 through the wires 132.

In FIG. 5A, the case 102 is illustrated as a prismatic battery case having two facing wide surfaces 125 and two facing narrow surfaces 126. However, types of cases other than a prismatic battery may be used. In addition, in FIG. 5A, a type of battery in which the openings 128 are formed in both ends is illustrated, but the present disclosure may be adaptively applied to a battery type in which an opening is formed in one end, a type in which an opening is formed in a wide surface, or other types.

The temperature detectors 130 may be selected from sensors such as thermocouples (TC), thermistors, or other semiconductor sensors that detect temperatures and output temperature detection signals. The temperature detectors 130 may be attached to electrode tabs 122 of the electrode assembly 114 as shown in FIG. 5B. The attachment method may include, for example, ultrasonic welding, laser welding, or heat fusion, attachment using an adhesive, attachment using a screw or pin, pressure bonding, etc. In FIG. 5B, it is illustrated that the temperature detectors 130 are attached to the electrode tabs 122, but the attachment location of each temperature detector 130 may be any location at which temperatures of components in a secondary battery need to be measured.

The wires 132 are connected to the temperature detectors 130, and the temperature detection signals are transmitted to the outside of the case 102 through the wires 132. In FIGS. 5A and 5B, the wires 132 are illustrated as having exposed portions 134 externally exposed via through holes 136 formed in the narrow surface 126 of the case 102 and inner portions 133 connected to an inner surface of the narrow surface 126 of the case 102. However, the locations of the through holes 136 and the exposed portions 134 of the wires on the narrow surface 126 of the case 102 are arbitrary, and actually, the through holes 136 and the exposed portions 134 of the wire may be located at various locations.

Portions of the wires 132 may pass through the through holes 136 formed in the narrow surface 126 of the case 102 to form the exposed portions 134, and sealing portions 137 may be formed of a sealing material in the through holes 136. That is, in FIG. 5A, the wires 132 are exposed and attached to the narrow surface 126 of the case 102 in advance.

The temperature detectors 130 may be provided as a plurality of temperature detectors 130, and the wires 132 connected to the plurality of temperature detectors 130 may be individually exposed after passing from the inside to the outside of the case 102. However, other scenarios are possible.

A process of accommodating the electrode assembly 114 into the case 102 prepared as shown in FIG. 5A is illustrated in FIG. 5B.

Referring to FIG. 5B, before the electrode assembly 114 is inserted into the case 102, the temperature detectors 130 are attached to the electrode tabs 122. Structurally, the temperature detectors 130 may be individually attached to the electrode tab 122 at a left side and the electrode tab 122 at the right side (in the orientation shown in FIG. 5B).

The electrode assembly 114 in which the temperature detectors 130 are attached to the electrode tabs 122 may be inserted into the case 102, and a cap assembly 104 may be attached to the electrode assembly 114 to manufacture the secondary battery (for temperature evaluation).

In addition, the connectors 124 may be coupled to the exposed portions 134 exposed to the outside of the case 102 as needed. The connectors 124 are connection ports for providing temperature detection signals from the temperature detectors 130 to a temperature measuring device. Wires may be directly connected to the exposed portions 134 and connected to the temperature measuring device without the connectors 124.

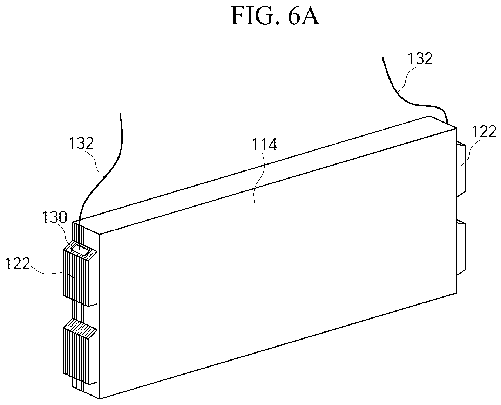

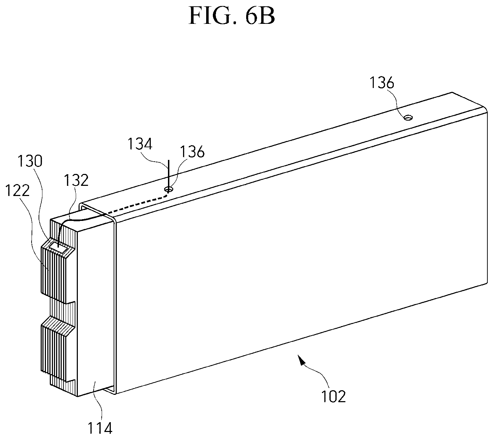

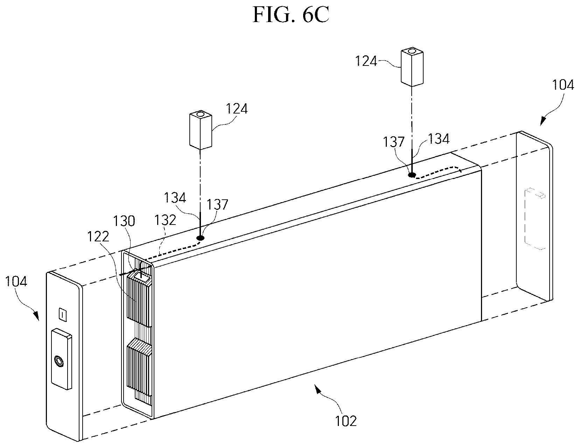

FIGS. 6A, 6B and 6C are views for describing a secondary battery temperature evaluation apparatus according to one or more other embodiments of the present disclosure. FIGS. 6A and 6B are views for describing another method of manufacturing a secondary battery for temperature evaluation shown in FIG. 4. FIG. 6A shows an electrode assembly 114 which is not accommodated in a case 102, and FIG. 6B shows the electrode assembly 114 being accommodated into the case 102.

In FIG. 6A, temperature detectors 130 may be attached to electrode tabs 122 of the electrode assembly 114. However, the temperature detectors 130 may be attached at different locations than the electrode tabs 122. Attachment locations of the temperature detectors may be determined according to the objective or target of temperature measurement. FIG. 6A shows the number of temperature detectors 130 to be two, and the temperature detectors 130 are attached to the electrode tabs 122 at both ends of the electrode assembly 114, but in other embodiments they may be attached at only one end and/or the number of temperature detectors 130 may vary.

Wires 132 for transmitting temperature detection signals are connected to the temperature detectors 130. As shown in FIG. 6B, through holes 136 through which the wires 132 pass may be formed in the case 102. In FIG. 6B, it is illustrated that the electrode assembly 114 in which the temperature detectors 130 are attached to the electrode tabs 122 is being inserted into the case 102. The electrode assembly 114 is inserted into the case 102, the wire 132 connected to the temperature detector 130 attached to one end passes through the through hole 136 of the case 102 to expose an exposed portion 134. Since FIG. 6B shows an initial state of the insertion of the electrode assembly 114, the wire 132 of the temperature detector 130 attached to the other end is not yet inserted into the through hole 136.

FIG. 6C shows a state in which portions of the wires 132 of the temperature detectors 130 attached to both ends of the electrode assembly 114 are exposed via the through holes 136 and the electrode assembly 114 is completely inserted into the case 102. Sealing portions 137 may be formed on the through holes 136 and the exposed portion 134 of the wires, and the cap assembly 104 may be attached to the openings of both ends of the case 102 to completely manufacture the secondary battery for temperature evaluation. In addition, connectors 124 may be connected to the exposed portions 134 of the wires 132 as needed.

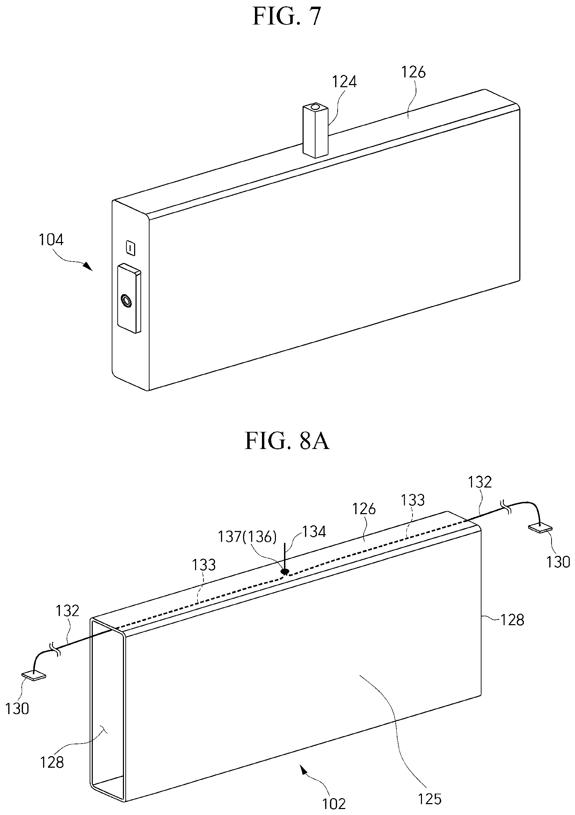

FIG. 7 is a view illustrating an exterior of a secondary battery for temperature evaluation according to one or more embodiments of the present disclosure.

A temperature detector is disposed in a case 102, and one connector 124 coupled to a wire connected to the temperature detector is disposed on an outer side of the case. In FIG. 7, it is illustrated that the number of connectors 124 is one unlike FIG. 4. However, as will be described below, although it is illustrated that the number of external connectors 124 is one in FIG. 7, a plurality of temperature detectors may be disposed therein.

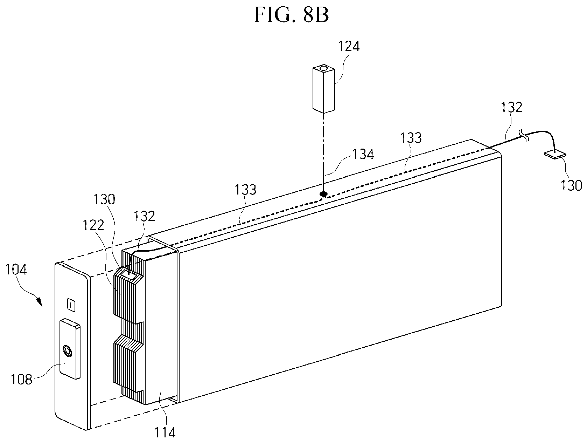

FIGS. 8A and 8B are views for describing a method of manufacturing the secondary battery for temperature evaluation illustrated in FIG. 7. FIG. 8A shows a case 102 in which an electrode assembly 114 is not yet accommodated, and FIG. 8B shows the electrode assembly 114 being accommodated into the case 102.

In FIG. 8A, although two temperature detectors 130 and two wires 132 are illustrated, the wires 132 may be combined and exposed after passing through one through hole 136 formed in the case 102 (to form an exposed portion 134). The exposed portion 134 is sealed at the through hole 136 to form a sealing portion 137.

In FIG. 8B, the temperature detectors 130 are attached to electrode tabs 122 at both ends of the electrode assembly 114 and are accommodated into the case 102, and then the electrode tabs 122 are inserted into the case 102, and a cap assembly 104 (two cap assemblies in the present embodiment, but there could be just one opening 128 and one cap assembly 104) is attached to the electrode assembly 114.

In the embodiment of FIGS. 8A and 8B, although the temperature detectors 130 are provided as a plurality of temperature detectors 130, the wires 132 connected to the plurality of temperature detectors 130 may be combined and exposed after passing from the inside to the outside of the case 102. Depending on the temperature detector 130, there is a type that temperature detectors 130 detect temperatures at a plurality of locations, output temperature detection signals through one wire, and transmit the temperature detection signals to a temperature measuring device, and even in this case, the embodiment of FIGS. 8A and 8B may be applied.

Hereinafter, a secondary battery temperature evaluation method using a temperature evaluation apparatus according to the present disclosure will be described. Reference numerals described in the following description are provided to refer to the above-described temperature evaluation apparatus.

The secondary battery temperature evaluation method according to one or more embodiments of the present disclosure includes providing a case 102 in which openings are formed in one or more ends of the case 102, providing sensors including temperature detectors 130 and wires 132 through which temperature detection signals detected by the temperature detectors 130 may be transmitted to the outside of the case 102, attaching the temperature detectors 130 of the sensors to an electrode assembly 114, exposing the wires 132 of the sensors such that the wires 132 pass from the inside to the outside of the case 102, accommodating the electrode assembly 114 into the case 102, and connecting the wires 132 exposed to the outside of the case 102 to a temperature measuring device to measure temperatures.

In one or more embodiments, attaching the temperature detectors 130 of the sensors to the electrode assembly 114 may include attaching the temperature detectors 130 of the sensors to electrode tabs of the electrode assembly 114.

In one or more embodiments, attaching the temperature detectors 130 of the sensors to the electrode assembly 114 may include attaching a plurality of temperature detectors 130 to the electrode assembly 114 at different locations. In this case, exposing the wires 132 of the sensors such that the wires 132 pass from the inside to the outside of the case 102 may include individually exposing the wires 132 of a plurality of sensors such that the wires 132 are individually passed from the inside to the outside of the case 102.

In one or more other embodiments, attaching the temperature detectors 130 of the sensors to the electrode assembly 114 may include attaching the temperature detectors 130 of the plurality of sensors to the electrode assembly 114 at different locations. In this case, exposing the wires 132 of the sensors such that the wires 132 pass from the inside to the outside of the case 102 may include combining (e.g., bundling) and exposing the wires 132 connected to the plurality of temperature detectors 130 such that the wires 132 pass from the inside to the outside of the case 102.

A secondary battery for temperature evaluation whose temperature is evaluated by applying the above-described secondary battery temperature evaluation apparatus or method will be described.

The secondary battery for temperature evaluation includes a case 102 in which openings are formed in one or more ends of the case 102, an electrode assembly 114 accommodated in the case 102 and formed by combining a plurality of electrode plates on which electrode tabs are formed, a cap assembly including terminals electrically connected to the electrode tabs of the electrode assembly 114, and sensors including temperature detectors 130 which are attached to the electrode assembly 114, detect temperatures, and output temperature detection signals and wires 132 which are connected to the temperature detectors 130 and exposed after passing from the inside to the outside of the case 102 and through which the temperature detection signals are transmitted to the outside of the case 102.

In one or more embodiments, the secondary battery for temperature evaluation may further include connectors 124 coupled to the wires 132 exposed to the outside of the case 102 and through which the temperature detection signals are provided to one or more measurement instruments.

In some embodiments, the temperature detectors 130 of the sensors may be attached to the electrode tabs of the electrode assembly 114.

In addition, in one or more embodiments, the case 102 may include through holes 136 through which the wires 132 of the sensors pass. The case 102 may be a prismatic secondary battery case 102 having two facing wide surfaces and two facing narrow surfaces, and in this case, the through holes 136 may be formed in the narrow surface of the case 102. In addition, the case 102 may further include sealing portions 137 which block the through holes 136 along with the wires 132.

In one or more embodiments, the sensors may be provided as a plurality of sensors, the wires 132 of the plurality of sensors may be individually exposed after passing from the inside to the outside of the case 102. In one or more other embodiments, the sensors may be provided as a plurality of sensors, and wires 132 of the plurality of sensors may be combined and exposed after passing from the inside to the outside of a case 102.

The purpose of the present disclosure is to obtain an accurate temperature measurement result for secondary battery temperature evaluation by attaching a sensor to an electrode assembly in a cell.

A sensor is attached to the outside of a cell to measure a temperature when evaluating the cell. In this case, sensors, such as thermocouples and thermistors, are attached near the positive electrode, negative electrode, and vents on the outer side of the cell, and there are disadvantages that it is difficult to precisely measure heat generation, and measurement locations may be changed depending on the worker.

According to the present disclosure, since a temperature sensor is directly attached to an electrode assembly to eliminate the temperature resistance of a battery case, a change in temperature is effectively observed compared to when a senor attached to an outer side of a cell. Accordingly, it is possible to obtain advantages such as 1) the present disclosure can be applied to battery monitoring using a feature of precise temperature detection at the cell level in more detail than a battery management system (BMS), and 2) the present disclosure can be applied to degradation behavior and temperature correlation analyses of an active material according to various evaluation conditions such as fast charging.

Although the present disclosure has been described above with respect to embodiments thereof, the present disclosure is not limited thereto. Various modifications and variations can be made thereto by those skilled in the art within the scope of the present invention as defined by the appended claims.

Example embodiments have been disclosed herein, and although specific terms are employed, they are used and are to be interpreted in a generic and descriptive sense only and not for purpose of limitation. **In** some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery temperature evaluation apparatus, comprising:
a case having an opening in at least one end of the case, an electrode assembly being accommodated in the case;
a temperature detector attached to the electrode assembly accommodated in the case, the temperature detector detecting a temperature and outputting a temperature detection signal; and
a wire connected to the temperature detector, the wire being exposed after passing from inside to outside of the case, and through which the temperature detection signal is transmitted outside of the case.

2. The secondary battery temperature evaluation apparatus as claimed in claim 1, further comprising a connector coupled to the wire through which the temperature detection signal is provided to a measurement device.

3. The secondary battery temperature evaluation apparatus as claimed in claim 1 or claim 2, wherein the temperature detector is attached to an electrode tab of the electrode assembly.

4. The secondary battery temperature evaluation apparatus as claimed in any one of the preceding claims, wherein the case includes a through hole through which the wire passes.

5. The secondary battery temperature evaluation apparatus as claimed in claim 4, further comprising a sealing portion which blocks the through hole along with the wire.

6. The secondary battery temperature evaluation apparatus as claimed in claim 4 or claim 5, wherein:
the case is a prismatic secondary battery case having two facing wide surfaces opposite to each other and two narrow surfaces opposite to each other; and
the through hole is in a narrow surface of the case.

7. The secondary battery temperature evaluation apparatus as claimed in any one of the preceding claims, wherein:
the temperature detector includes a plurality of temperature detectors; and
the wire includes a plurality of wires, each of the plurality of wires connected to one of the plurality of temperature detectors being exposed after passing from the inside to the outside of the case.

8. The secondary battery temperature evaluation apparatus as claimed in any one of the preceding claims, wherein:
the temperature detector includes a plurality of temperature detectors; and
wires connected to the plurality of temperature detectors are combined to each other and exposed after passing from the inside to the outside of the case.

9. A secondary battery temperature evaluation method, comprising:
providing a case having an opening in at least one end of the case;
providing a sensor including a temperature detector and a wire through which a temperature detection signal detected by the temperature detector is transmitted to an outside of the case;
attaching the temperature detector of the sensor to an electrode assembly;
exposing the wire of the sensor such that the wire passes from an inside to the outside of the case;
accommodating the electrode assembly in the case; and
connecting the wire exposed to the outside of the case to a temperature measuring device to measure a temperature.

10. The secondary battery temperature evaluation method as claimed in claim 9, wherein attaching the temperature detector of the sensor to the electrode assembly comprises attaching the temperature detector of the sensor to an electrode tab of the electrode assembly.

11. The secondary battery temperature evaluation method as claimed in claim 9 or claim 10, wherein:
attaching the temperature detector of the sensor to the electrode assembly comprises attaching a plurality of temperature detectors to the electrode assembly at different locations; and
exposing the wire of the sensor such that the wire of the sensor passes from the inside of the case to the outside of the case comprises exposing each wire of the plurality of temperature detectors such that each wire passes from the inside to the outside of the case.

12. The secondary battery temperature evaluation method as claimed in claim 9, claim 10 or claim 11, wherein:
attaching the temperature detector of the sensor to the electrode assembly comprises attaching each temperature detector of a plurality of sensors to the electrode assembly at different locations; and
exposing the wire of the sensor such that the wire passes from the inside to the outside of the case comprises combining each wire connected to the plurality of temperature detectors, resulting in wires, and exposing the wires such that the wires pass from the inside to the outside the case.

13. A secondary battery for temperature evaluation, comprising:
a case having an opening in at least one end of the case;
an electrode assembly accommodated in the case, the electrode assembly comprising a plurality of electrode plates having electrode tabs thereon;
a cap assembly comprising terminals electrically connected to the electrode tabs; and
a sensor comprising a temperature detector attached to the electrode assembly and a wire, wherein the temperature detector detects a temperature, and outputs a temperature detection signal, and wherein the wire is connected to the temperature detector, the wire being exposed after passing from an inside to an outside of the case, the wire transmitting the temperature detection signal is to the outside of the case.

14. The secondary battery for temperature evaluation as claimed in claim 13, further comprising a connector coupled to the wire exposed to the outside of the case, the wire transmitting the temperature detection signal to a measurement device.

15. The secondary battery for temperature evaluation as claimed in claim 13 or claim 14, wherein the temperature detector of the sensor is attached to the electrode tabs of the electrode assembly.
